# EUROPEAN PATENT APPLICATION

(11) **EP 1 045 117 A1**
(43) Date of publication of application: **18.10.2000**
(21) Application number: 00850059.7
(22) Date of filing: 31.03.2000
(51) Int. Cl.: F01M 13/02, F02M 25/06

(54) **Arrangement for ventilation of crankcase gases in an internal-combustion engine**

(30) Priority: 16.04.1999 SE 9901356
(71) Applicant: Volvo Lastvagnar AB, 405 08 Göteborg (SE)
(72) Inventor: Megas, Lucas, 41674 Göteborg (SE)
(74) Representative: Andersson, Per Rune

(57) **Abstract**

The invention refers to an arrangement for ventilation of crankcase gases in an internal-combustion engine (1) of a vehicle, comprising a conduit (18, 19) for recirculation of crankcase gases from the crankcase (15) of the engine (1) to the air inlet (12) of the engine (1), an oxidation catalyst (17) for cleaning of the crankcase gases, arranged along said conduit (18, 19), whereby the engine (1) also is supplied with a turbo unit (6) and an intercooler (11). The invention is characterized in, that said conduit (18, 19) comprises a conduit (19) that connects between the oxidation catalyst (17) and an incoming conduit (10) to the compressor (8) of the turbo unit (6). By the invention, an improved arrangement for ventilation of crankcase gas for turbocharged diesel engines is supplied.

## Description

### TECHNICAL FIELD

The present invention relates to an arrangement for ventilation of crankcase gases in an internal-combustion engine, according to the preamble of the subsequent claim 1. The invention is particularly intended for use in systems for ventilation of crankcase gases in heavy trucks.

### BACKGROUND ART

In connection with vehicles provided with an internal-combustion engine, different methods are today used for treatment of the gas that is being fed from the engine of the vehicle in connection with the combustion in the engine. Such exhaust treatment then occurs due to different reasons, e.g. demands regarding cleaning of hazardous pollutants in the exhaust gases together with desires regarding the fuel economy and lifetime of the engine.

In this context, it is previously known to use arrangements for ventilating crankcase gases out from the crankcase of the engine. The crankcase gases are being generated in the different combustion chambers of the engine during operation thereof, and contains a relatively high concentration of combustible hydrocarbons. The crankcase gases are led from the combustion chamber, between the respective cylinder liner and piston ring at the respective engine cylinder, and after that to the engine's crankcase. After that, the crankcase gases are led from the crankcase and further on to the engine's oil pan.

According to previously known technique, the crankcase gases are fed from the engine's oil pan and back to a suitable point in connection to the engine's inlet side. From there, the gas can once again be sucked into the engine's air inlet for combustion in the engine. The ventilation and the restoring of the crankcase gases back to the engine inlet side can reduce the discharge of hazardous pollutants from the engine.

One problem that occurs in previously known systems of the above mentioned kind refers to the fact that the crankcase gases that reach the oil pan incide towards the lubricating oil being present in the oil pan. This results in that a part of the lubricating oil is being transformed into aerosol. If this aerosol should be allowed to be recirculated to the engine's inlet, there could be coatings formed on different parts on the engine's inlet side, e.g. in the combustion chamber of the engine and on valves.

One further problem refers to the fact that said aerosol contains substances that one wishes to separate from the crankcase gases, so that they will not be recirculated to the engine inlet

In the patent document GB 1481037, an arrangement is described for ventilation of crankcase gases in an internal-combustion engine. According to this document, the crankcase gases which contain combustible gaseous components, are fed to the engine inlet via an oxidation catalyst. In this oxidation catalyst the combustible gaseous components are being oxidised, whereby resulting carbon dioxide and water are being recirculated towards the engine inlet. In order to make the oxidation catalyst reach its correct operating temperature fast, it is also arranged to be in mechanical contact with the exhaust manifold of the engine.

Diesel engines for trucks are often designed to system for turbo charging, whereby an increased amount of air can be compressed and fed into the engine in a well-known manner. Normally, such systems also include an intercooler, whereby the air that is being fed through the compressor can be cooled.

In the engine arrangements that comprise turbo charging and an intercooler, a problem occurs if ventilated crankcase gases were to be fed to a compressor in a turbo unit, to be compressed and after that fed to the intercooler. In this type of arrangement, a high degree of overcharging namely involves that the temperature in the compressor can be very high, up to 170° C. This causes the oil residues in the crankcase gas that are being fed to the compressor to carbonise, which creates a coating in the compressor. This makes the blades in the compressor thicker, which leads to a reduced efficiency of the compressor. To obtain the performance of the engine that corresponds to a system without recirculated crankcase gases there would then be a demand for a more efficient intercooler.

A further disadvantage relates to the fact that an oil film is condensed and will form a coating in the bottom of the intercooler. This leads to a reduced efficiency of the intercooler. Furthermore, there is a risk that the oil film is being sucked into the engine.

### DISCLOSURE OF THE INVENTION

The object of the present invention is to provide an improved arrangement for ventilation of crankcase gases of an internal-combustion engine, especially for an internal-combustion engine comprising a turbo unit and an intercooler. This is achieved with an arrangement, according to subsequent claim 1.

The invention constitutes an arrangement for ventilation of crankcase gases in an internal-combustion engine of a vehicle and comprises a connection for recirculation of crankcase gases from the engine's crankcase to the engine's air inlet, an oxidation catalyst for cleaning of the crankcase gases, arranged along said connection, whereby the engine furthermore is provided with a turbo unit and an intercooler. The invention is characterised in that said connection comprises a conduit that connects between the oxidation catalyst and an incoming conduit to the compressor of the turbo unit.

Preferred embodiments of the invention will be evident from the subsequent dependent claims.

### BRIEF DESCRIPTION OF DRAWINGS

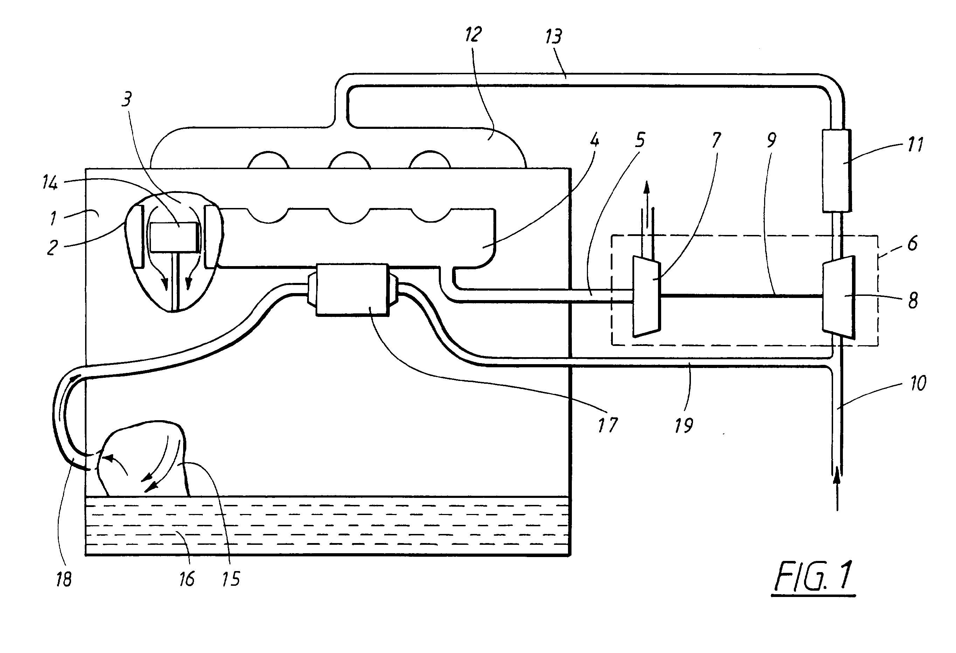

The invention will be described in the following in greater detail with reference to a preferred embodiment and the attached figure 1, which shows an arrangement in accordance to the present invention, in principle and in simplified form.

### PREFERRED EMBODIMENT

In figure 1 an arrangement according to the present invention is shown in principle. According to a preferred embodiment, the arrangement is used in connection to an internal-combustion engine 1, which preferably but not exclusively can be constituted by a diesel engine for a truck. The engine 1 is designed with a number of cylinders in a conventional way, whereby a cylinder 2 is shown schematic in the figure. During operation of the engine 1, combustion gases are generated in the combustion chamber 3 of the cylinder 2. The greater part of the combustion gases is led out to the surroundings via an exhaust manifold 4 of the engine 1, and an exhaust conduit 5 connected to it.

According to the invention, the engine 1 is arranged with a turbo unit 6 of a previously known kind. This turbo unit 6 comprises a gas driven turbine 7 and an air compressor 8. In a previously known manner, the exhaust gases are fed from the engine 1 through the manifold 4 and the exhaust conduit 5 and further on to the turbine 7. From the turbine 7 the exhaust gases are fed further out into the atmosphere, which is indicated with an arrow in connection with the turbine according to the figure.

The turbine 7 is connected to the compressor 8 via a common rotating shaft 9. In this way, the air that streams from the atmosphere to the compressor 8, via an incoming air conduit 10 (which is indicated with an arrow in the figure), may be compressed and fed further on to the engine 1. Preferably the compressed air that is fed from the compressor 8 is then led further on to an intercooler 11 known per se, in which intercooler the compressed air is cooled. Then, the cooled air is fed to the air inlet 12 of the engine, via a further conduit 13.

Some part of the combustion gases in each cylinder 2 will be fed past the piston 14 of the cylinder 2 (more exactly between the respective cylinder liner and piston rings of the cylinder 2) and in a direction towards the crankcase 15 of the engine 1. From the crankcase 15, this gas will be transported in a direction to an oil pan 16 of the engine 1. When the crankcase gas incides towards the oil present in the oil pan 1, some part of the lubricating oil will be transformed in the form of aerosol. If this aerosol should be recirculated to the air inlet 12 of the engine 1, it could form coatings on the combustion chamber, valves and other similar things of the engine 1, which of course is not wanted. For this reason, it is a fundamental principle behind the present invention that the exhaust gas is led from the oil pan 16 to an oxidation catalyst 17, via a special conduit 18 that connects from the oil pan 16. In the oxidation catalyst 17, the hydrocarbons that form part of the crankcase gases will be transformed into carbon dioxide and water. After that, the crankcase gases will be fed further on to a point along the conduit 10 for incoming air, i.e. a point upstream the compressor 8, with the aid of a further conduit 19.

It can be noted that since the engine 1 is of the kind that is supplied with a turbo unit 6 and an intercooler 11, the crankcase gases cannot be fed to a point downstream of the compressor 8, since a very high pressure (of the magnitude 100 kPa) prevails there, in relation to what prevails in the oil pan 16. Thus, in such a case, the pressure in the oil pan 16 would be too high. For this reason, the outgoing conduit 19 from the oxidation catalyst 17 has to be connected to a point upstream of the compressor 8.

The oxidation catalyst 17 is constructed to have a certain minimum temperature limit at which it is able to operate with a satisfactory cleaning ability. This temperature limit is normally in the magnitude of approximately 200° C. However, it can be noted that a large flow of crankcase gases may have a cooling effect on the oxidation catalyst 17 during operation of the engine 1. The temperature of the oxidation catalyst 17 may then possibly sink to a level below said temperature limit and will consequently not be able to operate with an optimal cleaning ability any more. For this reason, the invention is preferably arranged so that the oxidation catalyst 17 comprises heating means. According to the preferred embodiment, the oxidation catalyst 17 is more exactly arranged in direct mechanical contact with the exhaust manifold 4 of the engine 1, whereby it can be ensured that the desired temperature of the oxidation catalyst can be reached.

According to an alternative solution, the oxidation catalyst 17 may be positioned in direct mechanical contact with the exhaust conduit 5 of the engine 1, to make sure that the desired temperature limit is reached. According to a further alternative solution, the oxidation catalyst 17 may be equipped with an electrical heating device, to ensure that the correct operating temperature is achieved.

The invention is not restricted to the embodiment described above, but may be varied within the scope of the appended claims. For example, the invention may be used on different kind of vehicles, e.g. passenger cars, trucks and buses.

## Claims

1. Arrangement for ventilation of crankcase gases in an internal-combustion engine (1) of a vehicle, comprising a conduit (18, 19) for recirculation of crankcase gases from the crankcase (15) of the engine (1 ) to the air inlet (12) of the engine (1), an oxidation catalyst (17) for cleaning of the crankcase gases, arranged along said conduit (18, 19), whereby the engine (1) also is supplied with a turbo unit (6) and an intercooler (11),
**characterized in**, that said conduit (18, 19) comprises a conduit (19) that connects between the oxidation catalyst (17) and an incoming conduit (10) to the compressor (8) of the turbo unit (6).

2. Arrangement according to claim 1, **characterized in,** that the oxidation catalyst (17) is heatable.

3. Arrangement according to claim 2, **characterized in**, that the oxidation catalyst (17) is heatable by being arranged in direct mechanical contact with an exhaust manifold (4) of the engine (1).

4. Arrangement according to claim 2, **characterized in**, that the oxidation catalyst (17) is heatable by being arranged in direct mechanical contact with an exhaust conduit (5) of the engine (1).

5. Arrangement according to claim 2, **characterized in**, that the oxidation catalyst (17) is heatable by an electrical heating device.

6. Arrangement according to any one of the preceding claims, **characterized in**, that the engine is a diesel engine.
